# EUROPEAN PATENT APPLICATION

(11) **EP 3 901 231 A1**
(43) Date of publication of application: **27.10.2021**
(21) Application number: 19900862.4
(22) Date of filing: 16.12.2019
(51) Int. Cl.: C09J 133/04, C09J 7/20, C08F 220/18, C08F 220/04, C08F 212/08, C08F 2/24

(54) **ACRYLIC EMULSION PRESSURE-SENSITIVE ADHESIVE COMPOSITION**

(30) Priority: 20.12.2018 KR 20180166742; 13.12.2019 KR 20190166932
(71) Applicant: LG Chem, Ltd., Seoul 07336, (KR)
(72) Inventor: KIM, Hyo Min, Daejeon 34122 (KR); YANG, Seung Hun, Daejeon 34122 (KR); SEO, Sungjong, Daejeon 34122 (KR); KIM, Yeo Ju, Daejeon 34122 (KR)
(74) Representative: Goddar, Heinz J.
(86) International application number: PCT/KR2019/017814
(87) International publication number: WO 2020/130537

(57) **Abstract**

The present disclosure relates to an acrylic emulsion pressure-sensitive adhesive composition, and more particularly, to an acrylic emulsion pressure-sensitive adhesive compositionwhich can realize excellent adhesive properties and hardly occurs residuesduring peeling, and thus, can be used for paper labels, etc.

## Description

### [Technical Field]

### Cross Citation with Related Application(s)

This application claims the benefit of priority based on Korean Patent Application No. 10-2018-0166742 filed on December 20, 2018 and Korean Patent Application No. 10-2019-0166932 filed on December 13, 2019 with Korean Intellectual Property Office, the disclosures of which are incorporated herein by reference in their entity.

The present disclosure relates to an acrylic emulsion pressure-sensitive adhesive composition.

### [Background Art]

Pressure-sensitive adhesive (PSA) is a material that has a property of adhering to an adherend with a small pressure.It has the basic properties of initial adhesive force, adhesive force, and cohesive force as a viscoelastic material different from adhesives, and is used in various industrial fields, such as printing, chemicals, pharmaceuticals, home appliances, automobiles, and stationery.

Among them, adhesive labels called labels or label stickers are used in almost all industrial fields, such as printing, chemicals, pharmaceuticals, cosmetics, food industry, household appliances, automobiles, stationery, as well as product brands and advertisements. The adherend used as an adhesive label includes mainly papers such as art paper, simile paper, Mirage paper, gold and silver paper, thermosensitive paper, kraft paper, fluorescent paper, sterile paper, photographic paper,etc., or polymer films such as PET, PVC, PE, PP, PS, PI, etc., and usually, it is often applied to the final product aftera constant printing on the surface.

In the pressure-sensitive adhesive used for the pressure-sensitive adhesive labels, the intensity of adhesive forces is determined according to the application.

For example, a permanent pressure-sensitive adhesive exhibits a strong adhesive force of about 8 N/in or more based on a 180-degree peel strength using a standard adherend, but when the paper is used as an adherend, the adherend may be destroyedduring peeling.

On the other hand, a removable pressure-sensitive adhesive exhibits an adhesive force of about 5 to 8 N/in based on a 180-degree peel strength using a standard adherend. This is a level of adhesive force that can be peeled off if necessary, and can usually be used for temporary labeling applications.

However, in the case of a commonly used acrylic emulsion pressure-sensitive adhesive,if the adhesive force (tacky property) is improved, the shear resistance decreases, and it may cause a so-called residual phenomenon in which the pressure-sensitive adhesive sticks to the adherend.

Therefore, there is a need to developan pressure-sensitive adhesive which not only can realize excellent adhesive force, but alsodoes not cause a residualphenomenon.

### [DETAILED DESCRIPTION OF THE INVENTION]

### [Technical Problem]

An object of the present disclosureis to provide an acrylic emulsion pressure-sensitive adhesive compositionwhich not only can realize excellent adhesive force, but also does not cause a residualphenomenonwhen removed after adhesion.

### [Technical Solution]

According to one aspect of the present disclosure, there is provided an acrylic emulsion pressure-sensitive adhesive compositionincluding an emulsion polymer comprising: A) a first repeating unit derived from a (meth)acrylic ester-based first monomer containing an alkyl group having 1 to 10 carbon atoms;B) at least one repeating unit selected from the group consisting ofb1) a second repeating unit derived from an unsaturated carboxylic acid-based second monomer and b2) a third repeating unit derived from an aromatic vinyl-based third monomer; andC) a fourth repeating unit derived from the fourth monomer represented by the following Chemical Formula 1. 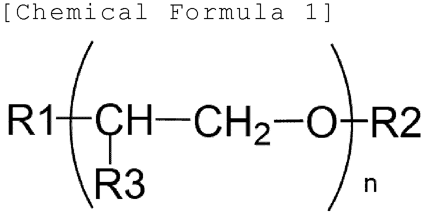 wherein, in Chemical Formula 1, R1 and R2 are each independently hydrogen, an alkyl having 1 to 8 carbons, or an alkenyl having 2 to 8 carbons, at least one of R1 and R2 is an alkenyl having 2 to 8 carbon atoms,R3 is hydrogen or an alkyl having 1 to 4 carbon atoms,and n is an addition mole number of alkylene oxide of1 to 30.

The first monomer may be at least one selected from the group consisting of methyl(meth)acrylate, ethyl(meth)acrylate, propyl(meth)acrylate, isopropyl(meth)acrylate, butyl(meth)acrylate, isobutyl (meth)acrylate,t-butyl (meth)acrylate, pentyl (meth)acrylate, hexyl (meth)acrylate, heptyl (meth)acrylate,octyl (meth)acrylate, isooctyl (meth)acrylate,2-ethylhexyl (meth)acrylate, decyl (meth)acrylate, isodecyl (meth)acrylate, dodecyl (meth)acrylate, isobornyl (meth)acrylate, and lauryl (meth)acrylate.

And, the second monmoner may be at least one selected from the group consisting of maleic anhydride, fumaric acid, crotonic acid, itaconic acid, and (meth)acrylic acid.

When the second repeating unit is included, the second repeating unit may be included in an amount of about 0.1 to about 10 parts by weight, or about 0.5 to about 5 parts by weight based on 100 parts by weight of the first repeating unit.

And, the third monomer may be at least one selected from the group consisting of styrene, methyl styrene, methyl styrene, butyl styrene, chlorostyrene, vinylbenzoic acid, methyl vinylbenzoate, vinylnaphthalene, chloromethylstyrene, hydroxymethylstyrene and divinylbenzene.

When the third repeating unit is included, the third repeating unit may be included in an amount of about 0.1 to about 10 parts by weight, or about 0.5 to about 5 parts by weight based on 100 parts by weight of the first repeating unit.

According to one embodiment of the present disclosure, in Chemical Formula 1, R1 is an alkenyl having 2 to 5 carbon atoms, R2 is hydrogen, methyl, ethyl, propyl, or butyl, and R3 may be hydrogen or methyl.

According to another embodiment of the present disclosure, in Chemical Formula 1, R1 is hydrogen or methyl,R2 is an alkenyl having 2 to 5 carbon atoms, and R3 may be hydrogen or methyl.

The forth repeating unit may be included in an amount of about 0.1 to about 10 parts by weight, or about 0.5 to about 5 parts by weight based on 100 parts by weight of the first repeating unit.

And, according to one embodiment of the present disclosure, the emulsion polymer may include about 80 to about 99.8 wt% of the first repeating unit; about 0.1 to about 10 wt% of at least one repeating unit selected from the group consisting of the second repeating unit and the third repeating unit; and about 0.1 to about 10 wt% of the fourth repeating unit,based on the total weight of the repeating units constituting the emulsion polymer, and preferably, it may include about 80 to about 98 wt% or about 90 to about 98 wt% of the first repeating unit; about 1 to about 10 wt% or about 1 to about 5 wt% of at least one repeating unit selected from the group consisting of the second repeating unit and the third repeating unit; and about 1 to about 10 wt% or about 1 to about 5 wt% of the fourth repeating unit.

Meanwhile, according to another aspect of the present disclosure, there is provided a method for producing an acrylic emulsion pressure-sensitive adhesive composition including the step of emulsion polymerizing a composition for polymerization comprising: a monomer mixture including A) a (meth)acrylic ester-based first monomer containing an alkyl group having 1 to 10 carbon atoms;B) at least one monomer selected from the group consisting of b1) an unsaturated carboxylic acid-based second monomer and b2) an aromatic vinyl-based third monomer; and C) a fourth monomer represented by the following Chemical Formula 1;a polymerization initiator; and an emulsifier. 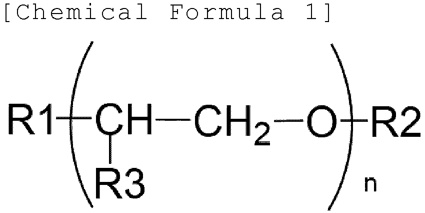 wherein, in Chemical Formula 1, R1 and R2 are each independently hydrogen, an alkyl having 1 to 8 carbons, or an alkenyl having 2 to 8 carbons, at least one of R1 and R2 is an alkenyl having 2 to 8 carbon atoms,R3 is hydrogen or an alkyl having 1 to 4 carbon atoms, and n is an addition mole number of alkylene oxide of 1 to 30.

The emulsifier may include at least one selected from the group consisting of an anionic emulsifier, a cationic emulsifier, and a nonionic emulsifier.

In this case, the anionic emulsifiermay include at least one selected from the group consisting ofsodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate.

In addition, the nonionic emulsifier may include at least one selected from the group consisting of polyethylene oxide alkyl aryl ether, polyethylene oxide alkyl amine, and polyethylene oxide alkyl ester.

The emulsifier may be used in an amount of 0.01 to 10 parts by weight, or about 1 to about 5 parts by weight based on 100 parts by weight of the monomer component.

Further, the composition for polymerization may further include an aqueous solvent.

Meanwhile, according to another aspect of the present disclosure, there is provided an adhesive member including a substrate; and a pressure-sensitive adhesive layer formed on at least one surface on the substrate, wherein the pressure-sensitive adhesive layeris formed by the acrylic emulsion pressure-sensitive adhesive composition according to claim 1 above.

In this case, the adhesive member may have a 180-degree peel strength value of about 400 gf/in or more, or about 400 to about 550 gf/in as measuredin accordance with FINATTest Method No. 1.

And, the adhesive member may have a shear holding power value of about 1,800 minutes or more, or about 2,000 to about 3,000 minutes as measuredin accordance with FINATTest Method No. 1.

Further, the adhesive member may have a residual ratio value of about 35% or less, or about 0 to about 30% after 180 degree peeling according to FINAT Test Method No. 8.

As used herein, terms such as first, second, and the like may be used to describe various components, and the terms are used only to discriminate one component from another component.

Further, the terms used herein are used only to describe exemplary embodiments, and are not intended to limit the present disclosure.

A singular expression includes a plural expression unless they have definitely opposite meanings in the context.

Further, in the present disclosure, in case a layer or an element is mentioned to be formed "on" or "above" another layer or element, it means that the layer or element is directly formed on the other layer or element, or it means that another layer or element may be additionally formed between layers or on a subject or substrate.

Since a variety of modification may be made to the present disclosure and there may be various forms of the present disclosure, specific examples are illustrated and will be described in detail below. However, it should be understood that this is not intended to limit the present disclosure to particular forms disclosed herein, and the invention is to cover allmodifications, equivalents, or alternatives falling within the spirit and technical scope of the present disclosure.

Hereinafter, the present disclosure will be described in detail.

According to one aspect of the present disclosure, there is provided an acrylic emulsion pressure-sensitive adhesive compositionincluding an emulsion polymer comprising: A) a first repeating unit derived from a (meth)acrylic ester-based first monomer containing an alkyl group having 1 to 10 carbon atoms;B) at least one repeating unit selected from the group consisting ofb1) a second repeating unit derived from an unsaturated carboxylic acid-based second monomer and b2) a third repeating unit derived from an aromatic vinyl-based third monomer; andC) a fourth repeating unit derived from the fourth monomer represented by the following Chemical Formula 1. 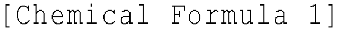 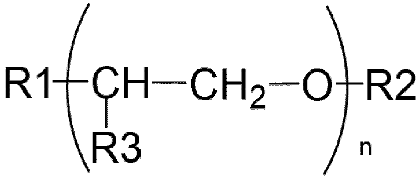 wherein, in Chemical Formula 1, R1 and R2 are each independently hydrogen, an alkyl having 1 to 8 carbons, or an alkenyl having 2 to 8 carbons, at least one of R1 and R2 is an alkenyl having 2 to 8 carbon atoms,R3 is hydrogen or an alkyl having 1 to 4 carbon atoms, and n is an addition mole number of alkylene oxide of 1 to 30.

The present inventors have found that in an acrylic emulsion pressure-sensitive adhesive composition comprising an emulsion of latex particles produced by emulsion polymerization of acrylate-based monomers, etc., when the latex particles are produced using only a combination of specific monomers, it is possible to effectively prevent a phenomenon where residuesoccur during peeling, even while having excellent adhesive force, thereby completing the present disclosure.

First, the acrylic emulsion pressure-sensitive adhesive composition according to one embodiment of the present disclosure includes an emulsion polymer of specific monomers, that is, latex particles,wherein each monomer may be present in the form of repeating units derived from the monomers within the latex particles.

### Monomer

First, in the emulsion polymerization for producing the latex particles, a (meth)acrylic ester-based monomer containing an alkyl group having 1 to 10 carbon atoms may be used, which may be referred to as a first monomer. Thereby, the latex particles may include a repeating unit derived from a (meth)acrylic ester-based monomer containing an alkyl group having 1 to 10 carbon atoms, which may be referred to as a first repeating unit.

The first monomer may be at least one selected from the group consisting of methyl(meth)acrylate, ethyl(meth)acrylate, propyl(meth)acrylate, isopropyl(meth)acrylate, butyl(meth)acrylate, isobutyl (meth)acrylate,t-butyl (meth)acrylate, pentyl (meth)acrylate, hexyl (meth)acrylate, heptyl (meth)acrylate, octyl (meth)acrylate, isooctyl (meth)acrylate,2-ethylhexyl (meth)acrylate, decyl (meth)acrylate, isodecyl (meth)acrylate, dodecyl (meth)acrylate, isobornyl (meth)acrylate, and lauryl (meth) acrylate, and these may be used alone, or in combination of two or more.

Further, in the emulsion polymerization for producing the latex particles, an unsaturated carboxylic acid-based monomer may be further used, which may be referred to as a second monomer. Thereby, the latex particles may include a repeating unit derived from an unsaturated carboxylic acid-based monomer, which may be referred to as a second repeating unit.

The second monomer may be at least one selected from the group consisting of maleic anhydride, fumaric acid, crotonic acid, itaconic acid, and (meth)acrylic acid, and these may be used alone or in combination of two or more.

When the second repeating unit is included, the second repeating unit may be included in an amount of about 0.1 to about 10 parts by weight, or about 0.5 to about 5 parts by weight based on 100 parts by weight of the first repeating unit.

Further, in the emulsion polymerization for producing the latex particles,an aromatic vinyl-based monomer may be further used, which may be referred to as a third monomer. Thereby, the latex particles may include a repeating unit derived from an aromatic vinyl-based monomer, which may be referred to as a third repeating unit.

Further, the aromatic vinyl-based monomermay be at least one selected from the group consisting of styrene, methyl styrene, methyl styrene,butyl styrene, chlorostyrene, vinylbenzoic acid, methyl vinylbenzoate, vinylnaphthalene, chloromethylstyrene, hydroxymethylstyrene and divinylbenzene.

When the third repeating unit is included, the third repeating unit may be included in an amount of about 0.1 to about 10 parts by weight, or about 0.5 to about 5 parts by weight based on 100 parts by weight of the first repeating unit.

Further, in the emulsion polymerization for producing the latex particles, the monomer represented by the following Chemical Formula 1 is further used, which may be referred to as a fourth monomer. Thereby, the latex particles may include a repeating unit derived from the fourth monomer, which may be referred to as a fourth repeating unit. 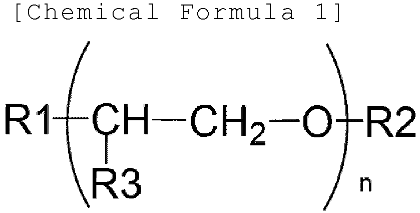 wherein, in Chemical Formula 1,
R1 and R2 are each independently hydrogen, an alkyl having 1 to 8 carbons, or an alkenyl having 2 to 8 carbons, at least one of R1 and R2 is an alkenyl having 2 to 8 carbon atoms,R3 is hydrogen or an alkyl having 1 to 4 carbon atoms, and n is an addition mole number of alkylene oxide of 1 to 30.

The alkenyl group may have a straight-chain or branched-chain configuration.

Specifically, the monomer represented by Chemical Formula 1 has a hydrophilic part and a hydrophobic part in the molecule together, and due to the molecular structure containing a specific repeating unit, it may play a role similar to an emulsifierduring emulsion polymerization, can allow a hydrophobic interaction with an alkyl (meth)acrylate monomer, and can be present inside the formed latex particles.

Thereby, when these latex particles containing the repeating unit as described above are used in the acrylic emulsion pressure-sensitive adhesive composition, excellent shear holding power can be realized, in particular, an effect of significantly reducing the occurrence of residues during peeling can be realized.

In addition, in Chemical Formula 1, the value of n representing an addition mole number of alkylene oxide may be 1 to 30, preferably about 2 to about 25, or about 3 to about 20.

According to one embodiment of the present disclosure, in Chemical Formula 1, R1 is an alkenyl having 2 to 5 carbon atoms,R2 is hydrogen, methyl, ethyl, propyl, or butyl,R3 may be hydrogen or methyl. Specific examples of these monomers include vinyl polyethylene glycol, allyl polyethylene glycol, methallyl polyethylene glycol,buten-2-yl polyethylene glycol, buten-3-yl polyethylene glycol,2-methyl-buten-2-ylpolyethylene glycol, and3-methyl-buten-2-ylpolyethylene glycol, or their methyl ether, ethyl ether, propyl ether, or butyl ether, etc., but the present disclosure is not necessarily limited thereto.

According to another embodiment of the present disclosure, in Chemical Formula 1, R1 is hydrogen or methyl, R2 is an alkenyl having 2 to 5 carbon atoms, and R3 may be hydrogen or methyl. Specific examples of these monomers include polyethylene glycol monovinyl ether, polyethylene glycol monoallyl ether, polyethylene glycol monomethallyl ether, polyethylene glycol monobuten-2-yl ether, polyethylene glycol monobuten-3-yl ether, polyethylene glycol mono-2-methyl-buten-2-yl ether, and polyethylene glycol mono-3-methyl-buten-2-yl ether, etc., but the present disclosure is not necessarily limited thereto.

The fourth repeating unit may be included in an amount of about 0.1 to about 10 parts by weight, preferably about 0.5 to about 5 parts by weight based on 100 parts by weight of the first repeating unit.

When the content of the fourth repeating unit is too small, it may be difficult to achieve the above-described effects. When the content of the fourth repeating unit is too large,the fourth repeating unit is mainly present in the outer portion of the latex particles formed, and thus, an unfavorable problem may occur in terms of the shear holding power or the occurrence of residues.

And, in this respect, the emulsion polymer may include about 80 to about 99.8 wt% of the first repeating unit; about 0.1 to about 10 wt% of at least one repeating unit selected from the group consisting of the second repeating unit and the third repeating unit; and about 0.1 to about 10 wt% of the fourth repeating unit,based on the total weight of the repeating units constituting the emulsion polymer, and preferably, it may include about 80 to about 98 wt% or about 90 to about 98 wt% of the first repeating unit; about 1 to about 10 wt% or about 1 to about 5 wt% of at least one repeating unit selected from the group consisting of the second repeating unit and the third repeating unit; and about 1 to about 10 wt% or about 1 to about 5 wt% of the fourth repeating unit.

When it is out of the above content range or when other monomers are used, the pressure-sensitive adhesive force or the adhesive force of the acrylic emulsion pressure-sensitive adhesive composition producedmay be reduced, and there may be a problem that a large amount of residues occur during peeling.

### Emulsion polymerization

The emulsion polymer contained in the composition according to one embodiment of the present disclosure, that is, latex particles,
can be produced by an emulsion polymerization method, including the step of emulsion polymerizing a composition for polymerization comprising: a monomer mixture including A) a (meth)acrylate-based first monomer containing an alkyl group having 1 to 10 carbon atoms; at least one repeating unit selected from the group consisting of B) an aromatic vinyl-based second monomer, and C) an unsaturated carboxylic acid-based third monomer; and D) a fourth monomer which simultaneously contains both ethylenically unsaturated bond and hydrogenbondfunctional groupsin the molecule; a polymerization initiator; and an emulsifier.

In this case, the polymerization temperature and polymerization time can be appropriately determined if necessary.For example, the polymerization temperature may be about 50°C to about 200°C, and the polymerization time may be about 0.5 hours to about 20 hours.

The polymerization initiator that can be used during the emulsion polymerization may be an inorganic or organic peroxide. For example, a watersoluble polymerization initiator including potassium persulfate, sodium persulfate, ammonium persulfate, and the like, and an oil-soluble polymerization initiators including cumene hydroperoxide, benzoyl peroxide, and the like can be used.

In addition, in order to accelerate the initiation of the reaction of the peroxide together with the polymerization initiator, an activator may be further included. As such an activator, one or more selected from the group consisting of sodium formaldehyde sulfoxylate, sodium ethylenediaminetetraacetate, ferrous sulfate, and dextrose may be used.

The polymerization initiator may be included in an amount of about 0.1 to about 10 parts by weight, preferably about 0.1 to about 5 parts by weight, based on 100 parts by weight of the monomer mixture on a dry weight basis.

According to one embodiment of the present disclosure, the acrylic emulsion pressure-sensitive adhesive composition may, in addition to the above-described components, include other additives without particular limitation within a range that does not reduce the effects intended by the present disclosure.

Specifically, in order to adjust the pH in the polymerization reaction and to impart polymerization stability, an electrolyte may be further included.Examples thereof include sodium hydroxide, sodium bicarbonate, sodium carbonate, sodium phosphate, sodium sulfate, sodium chloride, and the like, but are not limited thereto. Further, these may be used alone or in combination of two or more.

Emulsion polymerization can be performed specifically through the following steps:
a first step of dispersing an emulsifier in a solvent to prepare an emulsion liquid;
a second step of mixing the monomer mixture containing each monomer component and an emulsifier, etc., to prepare a pre-emulsion; and
a third step of mixing the emulsion liquid of the first step and the pre-emulsion of the second step in the presence of a polymerization initiator to perform emulsion polymerization.

In a specific embodiment of the present disclosure, the above-described acrylic emulsion pressure-sensitive adhesive composition can be produced, specifically, by the following method, but is not necessarily limited thereto.

First, in the first step, an emulsion liquid containing an emulsifier is prepared.This is separate from the following pre-emulsion production process. As the emulsifier, an anionic emulsifier may be used alone, or an anionic emulsifier, a cationic emulsifier and the abve-mentiioned nonionic emulsifier can be used together. These emulsifier components and solvents such as water can be mixed to produce an emulsion liquid.

In the process of preparing the emulsion liquid, initial micelles having a size of several nanometers can be formed stably.

Next, the second step is a process of producing a pre-emulsion containing the above-mentioned monomer mixture, and each of the above-mentioned monomers, emulsifiers, etc. are mixed with water to produce a pre-emulsion.

Also at this time, as the emulsifier, an anionic emulsifier may be used alone, or an anionic emulsifier and the above-mentioned nonionic emulsifier may be used together.In this process, nano-sized latex particles may be formed in the pre-emulsion.

That is, the above-mentioned emulsifier can be used in any one or more of the emulsion liquid production step, and the pre-emulsion production step.

Then, in the third step, the polymerization initiator is added to the emulsion liquid prepared above, and then the pre-emulsion and the polymerization initiator are continuously added in an equal ratio for a predetermined time.

In a non-limiting example of the present disclosure, the content of the polymerization initiator added to the emulsion liquidmay be about 0 to about 1 part by weight based on 100 parts by weight of the monomer mixture, and the content of the polymerization initiator added together with the pre-emulsion may be about 0.1 to about 2 parts by weight based on 100 parts by weight of the monomer mixture. The continuously adding time may be about 3 hours to about 7 hours.

Through this process, floating monomers or polymers in the pre-emulsion can flow into the initial particles produced in the emulsion liquid.

The products of these reactions may subsequently undergo a warm polymerization process in the presence of an additional polymerization initiator, through which polymerization of the remaining monomers is carried out.

At this time, the polymerization initiator may be further added in an amount of about 0.1 to about 10 parts by weight based on 100 parts by weight of the monomer mixture, and the warm polymerization may be performed at a temperature of about 75 to about 85°C for about 40 minutes to about 80 minutes.

The method for producing the acrylic emulsion pressure-sensitive adhesive composition is dualized into an emulsion liquid production process and a pre-emulsion production process, and then can be performed by a simple method of mixing the pre-emulsion with the emulsion liquid, so that the process stability and productivity can be improved compared to conventional methods of producing an acrylic emulsion pressure-sensitive adhesive composition with high-solid content and low-viscosity.

Meanwhile, a chain transfer agent may be used in the process of producing the pre-emulsion.The chain transfer agent plays a role of allowing homopolymers, which are polymers composed of only one type of monomer, to introduce into the micelles, and may include sodium carbonate, sodium methylallyl sulfonate, n-dodecyl mercaptan, etc., but the present disclosure is not necessarily limited thereto.

Further, in one embodiment of the present disclosure, after the polymerization step, a step of adjusting the pH may be further performed.

For the adjustment of the pH of the acrylic emulsion resin, a method commonly used in the art can be used without particular limitation. For example, inorganic materials, such as hydroxides, chlorides and carbonates of monovalent or divalent metals, which are alkaline materials, ammonia or organic amines may be used.

### Emulsifier

In addition, the emulsifier used for the emulsion polymerization may include at least one selected from the group consisting of an anionic emulsifier, a cationic emulsifier, and a nonionic emulsifier.

These emulsifiers are materials that have a hydrophilic group and a hydrophobic group at the same time, and in the emulsion polymerization process, a micelle structure is formed, and polymerization of each monomer can occur inside the micelle structure.

The emulsifier commonly used in the emulsion polymerization can be divided into an anionic emulsifier, a cationic emulsifier, and a nonionic emulsifier, etc. From the viewpoint of polymerization stability in emulsion polymerization, two or more kinds may also be mixed and used.

Specifically, the nonionic emulsifier may include at least one selected from the group consisting of polyethylene oxide alkyl aryl ether, polyethylene oxide alkyl amine, and polyethylene oxide alkyl ester.

Further, the anionic emulsifier may include at least one selected from the group consisting ofsodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate.

These may be used alone or in combination of two or more, and when an anionic emulsifier and a nonionic emulsifier are used in combination, it may be more effective, but the present disclosure is not necessarily limited to these types of the emulsifiers.

Further, the emulsifier may be used, for example, in an amount of about 0.1 to about 10 parts by weight, or about 1 to about 5 parts by weight, based on 100 parts by weight of the total weight of the monomer components used for producing the latex particles.

When the amount of the emulsifier used is too large, the particle size of the latex particles becomes small, which may cause a problem that the pressure-sensitive adhesive force and the adhesive force are reduced. When the emulsifier is used in an excessively small amount, there may be a problem that the stability of polymerization decreasesin the emulsion polymerization, and the stability of the produced latex particles is also reduced.

### Solvent

According to one embodiment of the present disclosure, the composition for polymerization may further include an aqueous solvent such as water, in addition to the above-mentioned emulsifiers ormonomer components.

At this time, the aqueous solventmay be used in an amount of about 10 to about 1,000 parts by weight based on 100 parts by weight of the latex particles, from the viewpoint of adjusting the stability and viscosity of the latex particles.For example, based on the total weight of the composition, the total solid content (TSC) may be used so as to be adjusted to about 10 to about 60 wt%.

When the amount of the solvent used is too low, there may be a problem that the viscosity increases in the acrylic emulsion adhesive composition, and during emulsion polymerization, stability of latex particles is reduced.Whenthe amount of the solvent used is too high, there may be a problem that the coating property decreases due to a decrease in viscosity.

### Adhesive member

The acrylic emulsion pressure-sensitive adhesive composition of the present disclosureproduced according to the above-mentioned method can be applied to an adhesive member such as a pressure-sensitive adhesive sheet, and the a pressure-sensitive adhesive sheet may be a building interior/exterior material, an interior material, an advertising film, or an adhesive film or sheet for labels, but the present disclosure is not necessarily limited thereto.

Such a sheet includes a substrate; and a pressure-sensitive adhesive layer formed on one side or both sides of the substrate, wherein the pressure-sensitive adhesive layer may be formed by the above-mentioned acrylic emulsion pressure-sensitive adhesive composition.

As for the substrate, papers such as art paper, simili paper, Mirage paper, gold and silver paper, thermosensitive paper, kraft paper, fluorescent paper, sterile paper, photographic paper, etc., or polymer films such as PET, PVC, PE, PP, PS, PI, etc. can be used.

At this time, the adhesive member may have a 180-degree peel strength value of about 400 gf/in or more, or about 400 to about 550 gf/in as measured in accordance with FINATTest Method No. 1.

Further, the adhesive member may have a shear holding power value of about 1,800 minutes or more, or about 2,000 to about 3,000 minutes as measured in accordance with FINATTest Method No. 8.

Further, the adhesive member may have a residual ratio value of about 35% or less, or about 0 to about 30% after 180 degree peeling according to FINAT Test Method No. 1.

### [ADVANTAGEOUS EFFECTS]

As described above, the acrylic emulsion pressure-sensitive adhesive composition according to one embodiment of the present disclosure has the advantage in that excellent adhesive force can be realized and at the same time, residueshardly occur during peeling.

### [DETAILED DESCRIPTION OF THE EMBODIMENTS]

Hereinafter, the operation and effect of the present disclosure will be described in more detail by way of concrete examples. However, these examples are merely presented for illustrative purposes only, and the scope of the present disclosure is not determined thereby.

### Preparation of acrylic emulsion adhesive composition

### Examples and Comparative Examples

To a 3L glass reactor equipped with a thermometer, a stirrer, a dropping funnel,a nitrogen gas injection tube and a reflux cooler were added200 g of water and 5 g of sodium polyoxyethylene aryl ether sulfate with a surfactant concentration of 26 wt%, and the inside of the reactor was replaced with nitrogen gas while stirring, and then the glass reactor was heated to 80°C and maintained for 30 minutes.

Separately, a total of 600 g of the monomers listed in Table 1 below was added to a 2 L beaker, and the mixture was thoroughlymixed for 30 minutes.A solution consisting of 14 g of sodium polyoxyethylene alkyl ether sulfate with a concentration of 26 wt%,2.5 g of sodium alkyl diphenyl ether disulfonate with a concentration of 48 wt%,2 g of sodium carbonate and 154 g of water were added thereto, and the mixture was thoroughly mixed with a stirrer to prepare a milky pre-emulsion.

6 g of ammonium persulfate with a concentration of 5 wt% was added to the glass reactor and dissolved therein with stirring for 10 minutes.

The pre-emulsion and 72 g of ammonium persulfate with a concentration of 5 wt% were continuously added in an equal ratio to the glass reactor for 4 hours.

Subsequently, from the time when the polymerization reaction time passed 4 hours, the temperature inside the glass reactor was maintained at 80°C for 1 hour, and then cooled to room temperature.

An aqueous sodium hydroxide solution with a concentration of 10 wt% was added to neutralize the pH to about 7 to 8, thereby obtaining an acrylic emulsion pressure-sensitive adhesive composition.

The contents of the monomers used are summarized in Table 1 below.

**[Table 1]**

| Content (part by weight) | First monomer | | | Second monomer | Fourth monomer | |
|---|---|---|---|---|---|---|
| | BA | 2-EHA | MMA | AA | Material/ Content | n value |
| Example 1 | 45.5 | 45.5 | 6 | 2 | MAPEG/1 | 10 |
| Example 2 | 45 | 45 | 6 | 2 | MAPEG/2 | 10 |
| Example 3 | 44.5 | 44.5 | 6 | 2 | MAPEG/3 | 10 |
| Example 4 | 45.5 | 45.5 | 6 | 2 | MAPEG/1 | 5 |
| Example 5 | 45 | 45 | 6 | 2 | MAPEG/2 | 5 |
| Example 6 | 44.5 | 44.5 | 6 | 2 | MAPEG/3 | 5 |
| Example 7 | 45.5 | 45.5 | 6 | 2 | MAPEG/1 | 15 |
| Example 8 | 45 | 45 | 6 | 2 | MAPEG/2 | 15 |
| Example 9 | 44.5 | 44.5 | 6 | 2 | MAPEG/3 | 15 |
| Example 10 | 45 | 45 | 6 | 2 | APEG/2 | 10 |
| Example 11 | 45 | 45 | 6 | 2 | TPEG/2 | 10 |
| Comparative Example 1 | 46 | 46 | 6 | 2 | - | - |

* First monomer: BA: butyl acrylate;2-EHA: 2-ethylhexyl acrylate;MMA: methyl methacrylate;
* Second monomer: AA: acrylic acid;
* Fourth monomer: MAPEG: methallyl polyethylene glycol,APEG: allyl polyethylene glycol,TPEG: isopentenyl polyethylene glycol;n value: addition mole number of ethylene oxide.

### Manufacture of adhesive member

The acrylic emulsion pressure-sensitive adhesive composition prepared above was coated onto a release paper to a thickness of 20 µm, dried at 120°C for 1 minute, and then laminated to a PE (polyethylene) film to manufacture an adhesive member.

The physical properties of the adhesive member were measured as follows.

### Measurement of 180 degree peel strength

The specimens prepared above were measured in accordance withFINAT Test MethodFTM 1

The specimen with a size of 1 inch X 5 inchwas prepared, and then attached to the surface of stainless steel (SUS304) and glass, respectively, and attached by reciprocating twice with a 2kg rollerat a speed of 300 mm/min.

The peel strength value was measured while 180 degreepeeling at a speed of 300 mm/min.

Five or more test specimens were prepared and measured, and then an the average value was obtained.

(Measurement equipment: TA Texture Analyzer, manufacturer: Stable Micro Systems)

### Measurement of shear holding power

The label specimens prepared above were measured for the shear holding powerin accordance with FINAT Test MethodFTM 8

The specimen with a size of 1 inch X 2 inch was prepared, and attached so that the surface of stainless steel (SUS304) and the attached surface was 1 inch x 0.5 inch, and then pressed by reciprocating twice with a 2 kg roller at a speed of 300 mm/min.

After 20 minutes, the attached sheet was attached to the wall surface inclined by about 2 degrees, a weight of 1,000 g was applied to the bottom, and the time at which the sheet was separated from the attached surface was measured.

Five test specimens were prepared, measured, and then the average value was determined.

(Measurement equipment: TA Texture Analyzer, manufacturer: Stable Micro Systems; measurement conditions: 23 °C and humidity 50%)

### Residual ratio

A 180 degree peel strength test was performed, and the residual ratio was measured by visually checking the ratio of the portion where the pressure-sensitive adhesivesticks after peeling among the total area.

Five test specimens were prepared, measured, and then the average value was determined.

The values measured above are summarized in Table 2 below.

**[Table 2]**

| | 180 degree peel strength (gf/in) | | Shear holding power(min) | Residual ratio (%) |
|---|---|---|---|---|
| | SUS | Glass | | |
| Example 1 | 447 | 456 | 2410 | 5 |
| Example 2 | 450 | 473 | 2670 | 0 |
| Example 3 | 496 | 512 | 2850 | 15 |
| Example 4 | 413 | 426 | 2130 | 0 |
| Example 5 | 422 | 431 | 2270 | 5 |
| Example 6 | 439 | 445 | 2310 | 20 |
| Example 7 | 461 | 464 | 2520 | 20 |
| Example 8 | 470 | 476 | 2630 | 20 |
| Example 9 | 495 | 499 | 2670 | 30 |
| Example 10 | 415 | 428 | 2790 | 5 |
| Example 11 | 467 | 491 | 2330 | 20 |
| Comparative Example 1 | 352 | 374 | 1530 | 50 |

Referring to Table 2 above, it can be seen that in the acrylic emulsion pressure-sensitive adhesive composition according to one embodiment of the present disclosure,very excellent 180 degree peel strength values can be achieved for both stainless steel and glass surfaces.

In addition, it can be seen that in the acrylic emulsion pressure-sensitive adhesive composition according to one embodiment of the present invention, the shear holding power is about 2000 minutes or more, which is very superior to Comparative Examples. At the same time, it can be clearly confirmed that the residual ratio is about 30% or less, or about 20% or less, and residueshardly occur.

That is, it was confirmed that in the acrylic emulsion pressure-sensitive adhesive composition according to one embodiment of the present disclosure,excellent adhesion-related properties, excellent shear holding power, and low residual ratio value can be simultaneously achieved. Thus, it is considered that it may be usefully used for labels and the like.

## Claims

1. An acrylic emulsion pressure-sensitive adhesive compositioncomprising an emulsion polymer comprising:
A) a first repeating unit derived from a (meth)acrylic ester-based first monomer containing an alkyl group having 1 to 10 carbon atoms;
B) at least one repeating unit selected from the group consisting ofb1) a second repeating unit derived from an unsaturated carboxylic acid-based second monomer and b2) a third repeating unit derived from an aromatic vinyl-based third monomer; and
C) a fourth repeating unit derived from the fourth monomer represented by the following Chemical Formula 1. 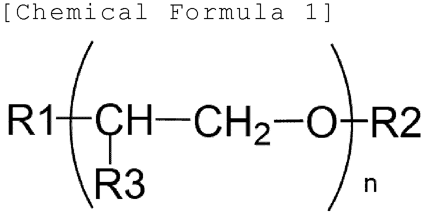 wherein, in Chemical Formula 1,
R1 and R2 are each independently hydrogen, an alkyl having 1 to 8 carbons, or an alkenyl having 2 to 8 carbons,
at least one of R1 and R2 is an alkenyl having 2 to 8 carbon atoms,
R3 is hydrogen or an alkyl having 1 to 4 carbon atoms, and
n is an addition mole number of alkylene oxide of 1 to 30.

2. The acrylic emulsion pressure-sensitive adhesive compositionof claim 1,
wherein the first monomer is at least one selected from the group consisting of methyl(meth)acrylate, ethyl(meth)acrylate, propyl(meth)acrylate, isopropyl(meth)acrylate, butyl(meth)acrylate, isobutyl (meth)acrylate,t-butyl (meth)acrylate, pentyl (meth)acrylate, hexyl (meth)acrylate, heptyl (meth)acrylate, octyl (meth)acrylate, isooctyl (meth)acrylate,2-ethylhexyl (meth)acrylate, decyl (meth)acrylate, isodecyl (meth)acrylate, dodecyl (meth)acrylate, isobornyl (meth)acrylate, and lauryl (meth)acrylate.

3. The acrylic emulsion pressure-sensitive adhesive compositionof claim 1,
wherein the second momoner is at least one selected from the group consisting of maleic anhydride, fumaric acid, crotonic acid, itaconic acid, and (meth)acrylic acid.

4. The acrylic emulsion pressure-sensitive adhesive compositionof claim 1,
wherein the second momoner is included in an amount of 0.1 to 10 parts by weight based on 100 parts by weight of the first repeating unit.

5. The acrylic emulsion pressure-sensitive adhesive compositionof claim 1,
wherein the third monomer is at least one selected from the group consisting of styrene, methyl styrene, methyl styrene, butyl styrene, chlorostyrene, vinylbenzoic acid, methyl vinylbenzoate, vinylnaphthalene, chloromethylstyrene, hydroxymethylstyrene and divinylbenzene.

6. The acrylic emulsion pressure-sensitive adhesive compositionof claim 1,
wherein the third repeating unit is included in an amount of 0.1 to 10 parts by weight based on 100 parts by weight of the first repeating unit.

7. The acrylic emulsion pressure-sensitive adhesive compositionof claim 1,
wherein in Chemical Formula 1, R1 is an alkenyl having 2 to 5 carbon atoms, R2 is hydrogen, methyl, ethyl, propyl, or butyl, and R3is hydrogen or methyl.

8. The acrylic emulsion pressure-sensitive adhesive compositionof claim 1,
wherein in Chemical Formula 1, R1 is hydrogen or methyl,R2 is an alkenyl having 2 to 5 carbon atoms, and R3 is hydrogen or methyl.

9. The acrylic emulsion pressure-sensitive adhesive compositionof claim 1,
wherein the forth repeating unit is included in an amount of 0.1 to 10 parts by weight based on 100 parts by weight of the first repeating unit.

10. The acrylic emulsion pressure-sensitive adhesive compositionof claim 1,
wherein the emulsion polymer includes:
80 to 99.8 wt% of the first repeating unit;
0.1 to 10 wt% of at least one repeating unit selected from the group consisting of the second repeating unit and the third repeating unit; and
0.1 to 10 wt% of the fourth repeating unit,
based on the total weight of the repeating units constituting the emulsion polymer.

11. Amethod for producing an acrylic emulsion pressure-sensitive adhesive composition comprising the step of emulsion polymerizing a composition for polymerization comprising:
a monomer mixture including
A) a (meth)acrylic ester-based first monomer containing an alkyl group having 1 to 10 carbon atoms;
B) at least one monomer selected from the group consisting of b1) an unsaturated carboxylic acid-based second monomer and b2) an aromatic vinyl-based third monomer; and
C) a fourth monomer represented by the following Chemical Formula 1;
a polymerization initiator; and
an emulsifier. 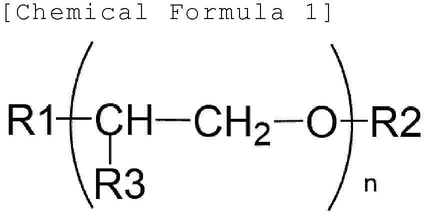 wherein, in Chemical Formula 1,
R1 and R2 are each independently hydrogen, an alkyl having 1 to 8 carbons, or an alkenyl having 2 to 8 carbons,
at least one of R1 and R2 is an alkenyl having 2 to 8 carbon atoms,
R3 is hydrogen or an alkyl having 1 to 4 carbon atoms, and
n is an addition mole number of alkylene oxide of 1 to 30.

12. Themethod for producing an acrylic emulsion pressure-sensitive adhesive composition of claim 11,
wherein the emulsifier includes at least one selected from the group consisting of an anionic emulsifier, a cationic emulsifier, and a nonionic emulsifier.

13. Themethod for producing an acrylic emulsion pressure-sensitive adhesive composition of claim 12,
wherein the anionic emulsifierincludes at least one selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate.

14. Themethod for producing an acrylic emulsion pressure-sensitive adhesive composition of claim 12,
wherein the nonionic emulsifier includes at least one selected from the group consisting of polyethylene oxide alkyl aryl ether, polyethylene oxide alkyl amine, and polyethylene oxide alkyl ester.

15. Themethod for producing an acrylic emulsion pressure-sensitive adhesive composition of claim 11,
wherein the emulsifier is used in an amount of 0.01 to 10 parts by weight based on 100 parts by weight of the monomer component.

16. Themethod for producing an acrylic emulsion pressure-sensitive adhesive composition of claim 11,
wherein the composition for polymerization further includes an aqueous solvent.

17. An adhesive member comprising:
a substrate; and
a pressure-sensitive adhesive layer formed on at least one surface on the substrate,
wherein the pressure-sensitive adhesive layeris formed by the acrylic emulsion pressure-sensitive adhesive composition according to claim 1.

18. The adhesive member of claim 16,
wherein it has a 180-degree peel strength value of 400 gf/in or more as measured according to FINAT Test Method No. 1.

19. The adhesive member of claim 16,
wherein it has a shear holding power value of 1,800 minutes or more as measured in accordance with FINATTest Method No. 8.

20. The adhesive member of claim 16,
wherein it has a residual ratio value of 35% or less after 180 degree peeling according to FINAT Test Method No. 1.
